Europäisches Patentamt

European Patent Office

Office européen des brevets

(19)

(11) Veröffentlichungsnummer : **0 028 732**
**B1**

(12)

# EUROPÄISCHE PATENTSCHRIFT

(45) Veröffentlichungstag der Patentschrift :
**17.10.84**

(21) Anmeldenummer : **80106411.4**

(22) Anmeldetag : **21.10.80**

(51) Int. Cl.³ : **C 08 F 36/18**

(54) **Verfahren zur Herstellung feststoffreicher Polychloroprenlatices.**

(30) Priorität : **02.11.79 DE 2944152**

(43) Veröffentlichungstag der Anmeldung :
**20.05.81 Patentblatt 81/20**

(45) Bekanntmachung des Hinweises auf die Patenterteilung : **17.10.84 Patentblatt 84/42**

(84) Benannte Vertragsstaaten :
**DE FR GB**

(56) Entgegenhaltungen :
**DE-A- 2 008 674**
**DE-A- 2 603 833**
**DE-A- 2 650 714**

(73) Patentinhaber : **BAYER AG**
**Konzernverwaltung RP Patentabteilung**
**D-5090 Leverkusen 1 Bayerwerk (DE)**

(72) Erfinder : **Nolte, Wilfried, Dr.**
**Gronenborn C 33**
**D-5090 Leverkusen (DE)**
Erfinder : **Keller, Wilfried, Dr.**
**Moltkestrasse 9**
**D-4047 Dormagen 1 (DE)**
Erfinder : **Esser, Heinz, Dr.**
**Am Jungholzkamp 7**
**D-5093 Burscheid (DE)**

**Beschreibung**

Die Erfindung betrifft ein Verfahren zur Herstellung feststoffreicher Polychloroprenlatices durch wäßrige Emulsions-Polymerisation von Chloropren mit gegebenenfalls weiteren Comonomeren in Gegenwart von Alkalisalzen der disproportionierten Abietinsäure, Alkalihydroxid, dem Formaldehydkondensat von Naphthalinsulfonsäure und einem Phosphat, wobei zumindest ein Teil der Alkaliionen aus Kalium besteht und die Polymerisation durch Formamidinsulfinsäure initiiert wird.

Feststoffreiche Polychloroprenlatices werden für viele Anwendungszwecke benötigt und weisen Feststoffgehalte über 50 Gew.-% bis etwa 65 Gew.-% auf.

Bis vor kurzem waren nur zweistufige Herstellverfahren bekannt und wurden ausgeübt. Dabei wird im ersten Schritt durch Emulsionspolymerisation ein etwa 30-35 %iger Latex hergestellt. Dieser wird in einer zweiten Verfahrensstufe auf 50 bis 65 Gew.-% Feststoffgehalt aufkonzentriert. Dieses zweistufige Verfahren hat Nachteile wie z. B. hohe Fertigungskosten, Materialverlust und Abwasserbelastung beim Aufkonzentrieren sowie eine gewisse Minderung der kolloidchemischen Stabilität des Latex.

Bei der Emulsionspolymerisation feststoffreicher Polychloroprenlatices müssen vor allem zwei Schwierigkeiten überwunden werden. Wird in der für einen ca. 35 %igen Latex üblichen Rezeptur der Wasseranteil so weit reduziert, daß ein ca. 60 %iger Latex resultieren müßte, so wird die Reaktionsgeschwindigkeit verringert — in aller Regel bleibt die Reaktion bei mäßigem Umsatz stehen — außer dem steigt die Viskosität des Reaktionsgemisches so stark an, daß ein einwandfreies Durchmischen mittels Rührer und ein einwandfreies Abführen der Polymerisationswärme nicht zu erreichen ist. Wegen dieser Gründe ist es auch nicht möglich, die Polymerisation wie üblich bei 60 bis 70 % Umsatz abzubrechen. Der Wasseranteil im Reaktionsgemisch wäre zu gering, die Viskosität zu hoch. Deshalb wird bei der direkten Polymerisation feststoffreicher Latices der Umsatz in Abhängigkeit von der erforderlichen Feststoffkonzentration auf über 85 % getrieben.

In der DE-OS 2 008 674, DE-OS 2 047 450 und DE-OS 2 603 833 wird die Möglichkeit beschrieben, direkt durch Polymerisation zu einem feststoffreichen Polychloroprenlatex zu gelangen.

Nach diesen Veröffentlichungen kann das Ziel, einen feststoffreichen Latex mit guter kolloidaler Stabilität herzustellen, erreicht werden,

a) durch Verwendung von 1,7 bis 2,7 Teilen disproportionierter Abietinsäure und bis zu etwa 2,5 Teilen Formaldehydkondensat von Naphthalinsulfonsäure, wenn die Kationen der Salze und der eingesetzten Base ganz oder teilweise aus Kalium bestehen (DE-OS 2 008 674),

b) durch Einhaltung der unter a) genannten Maßnahmen und der zusätzlichen Verwendung von 0,15 bis 0,5 Teilen einer polymerisierten ungesättigten Fettsäure (DE-OS 2 047 450),

c) durch Verwendung von 2,0 bis 6,0 Teilen disproportionierter Abietinsäure, wobei ein Teil durch 0,05-3,0 Teile fettsaurer Alkalisalze ersetzt sein kann und zusätzlichem Einsatz von 0,01 bis 1,0 Teilen nichtionischer Emulgatoren (DE-OS 2 603 833).

Im letzten Fall kann auf die Anwendung von Kaliumionen verzichtet werden. Alle Angaben in Teilen sind Gewichtsteile, bezogen auf 100 Gew.-Teile Monomer.

Diese beschriebenen Herstellverfahren weisen im wesentlichen folgende Nachteile auf : bei der Polymerisation treten Schwierigkeiten auf in Form von ungenügendem Umsatz oder zu hoher Viskosität, der fertige Latex weist ungenügende anwendungstechnische Eigenschaften auf, insbesondere eine zu geringe kolloidchemische Stabilität (Zinkoxid-Stabilität).

Es wurde nun gefunden, daß sich die geschilderten Nachteile vermeiden lassen, wenn bei der Herstellung der feststofffreien Polychloroprenlatices die erfindungsgemäßen Maßnahmen getroffen werden.

Die Erfindung betrifft somit ein Verfahren zur Polymerisation von Chloropren, das bis zu 50 Gew.-% eines copolymerisierbaren Monomeren enthalten kann, in einer alkalischen, wäßrigen Emulsion, deren Alkaliionen zumindest teilweise Kaliumionen sind, zu einem feststofffreien Latex mit Feststoffgehalten von 50 bis 65 Gew.-% in Gegenwart eines Alkalisalzes der disproportionierten Abietinsäure und 0,3 bis 2,0 Gew.-Teilen eines Formaldehydkondensats einer Naphthalinsulfonsäure sowie eines Alkalihydroxids, wobei die Polymerisation bis zu einem Umsatz über 90 % durchgeführt wird, das dadurch gekennzeichnet ist, daß

a) 2,8 bis 3,8 Gew.-Teile des Alkalisalzes der disproportionierten Abietinsäure verwendet werden,

b) die wäßrige Phase zusätzlich 0,25 bis 0,75 Gew.-Teile eines Alkaliphosphats und/oder -polyphosphats enthält und

c) die Polymerisation mittels Formamidinsulfinsäure initiiert wird, wobei sich alle Gewichtsteile auf 100 Gew.-Teile Monomer beziehen.

Zwar unterscheidet sich die Zusammensetzung der Reaktionsmischung des Ausführungsbeispiels der DE-A-26 50 714 nur dadurch, daß ausschließlich Natriumionen vorhanden sind ; es handelt sich hierbei aber nicht um ein Verfahren zur Herstellung feststoffreicher Latices, sondern um die Herstellung geringer konzentrierter Latices.

Geeignete Comonomere für das erfindungsgemäße Verfahren sind z. B. 2,3-Dichlorbutadien, Vinylaromaten wie Styrol, (Meth)acrylnitril oder Butadien.

Um Feststoffgehalte von 50 bis 65 Gew.-% zu erreichen, muß der Polymerisationsansatz 55 bis 90 Gew.-Teile Wasser enthalten und muß die Polymerisation bis zu einem Umsatz über 90 % geführt

2

werden. Die nicht umgesetzten Monomeren werden durch Strippen mit Wasserdampf oder durch Ausrühren im Vakuum aus dem Latex entfernt.

Die Polymerisation wird nach bekannten Verfahren wie Batch- oder Zulaufverfahren, bevorzugt jedoch kontinuierlich, als Emulsionspolymerisation durchgeführt. Die wäßrige Phase enthält die erfindungsgemäßen Anteile von 2,8-3,8, vorzugsweise 3,2-3,6 Gew.-Teilen disproportionierte Abietinsäure, 0,3-1,0, vorzugsweise 0,5-0,7 Gew.-Teile Formaldehydkondensat der Naphthalinsulfonsäure und 0,25-0,75, vorzugsweise 0,4-0,6 Gew.-Teile eines Phosphats oder Polyphosphat sowie 0,3 bis 1,2 Teile Alkalihydroxid, so daß am Ende der Polymerisation ein alkalischer pH-Wert bevorzugt von etwa 11 bis 13 resultiert. Die mit den genannten Hilfsmitteln — Emulgatoren und Phosphat — eingebrachten Alkaliionen müssen zumindest teilweise aus Kalium bestehen. Ein Anteil von etwa 5-20 mval pro 100 g Chloropren ist als ausreichend zu betrachten.

Geringe Mengen weiterer Emulgatoren anionischer oder nichtionischer Natur können zusätzlich vorhanden sein, ohne daß erfindungsgemäße Verfahren zu beeinträchtigen.

Als Alkalihydroxid kann Natriumhydroxid bei gleichzeitiger Verwendung von Kaliumsalzen der Emulgatoren und/oder Phosphat eingesetzt werden. Vorzugsweise wird man jedoch mit den Natriumsalzen der Emulgatoren und Phosphaten arbeiten und Kaliumhydroxid zur Einstellung des pH-Wertes verwenden.

Als Phosphate können Alkalisalze der ortho-Phosphorsäure, der Diphosphorsäure oder der Hexametaphosphorsäure eingesetzt werden.

Die Polymerisation wird mit Formamidinsulfinsäure in Form einer 1,0 bis 2,5 gew.-%igen wäßrigen Lösung initiiert und aufrechterhalten. Die benötigte Menge ist abhängig von dem angewandten Polymerisationsverfahren und beträgt im allgemeinen 3,0 Gew.-Teile (kontinuierliches Verfahren) bis 10,0 Gew.-Teile (diskontinuierliches Verfahren) auf 100 Gew.-Teile Monomer (berechnet auf 2,5 gew.-%ige Lösung).

Die Eigenschaften des Polymeren können durch Anwesenheit modifizierender Mittel wie Alkylmercaptan, Schwefel oder Dialkylxanthogendisulfid bei der Polymerisation verändert, bzw. nach Wunsch eingestellt werden.

Die Herstellung der erfindungsgemäßen Polychloroprenlatices kann wie bei bekannter Emulsionspolymerisation chargenweise oder kontinuierlich erfolgen.

Es ist möglich, vollständig chargenweise zu arbeiten, wobei die Gesamtmenge des (der) Monomeren in der wäßrigen Emulgatorlösung emulgiert und die Polymerisation durch Zugabe des Initiators ausgelöst und aufrecht erhalten wird. Die Zugabe des Initiators erfolgt absatzweise oder besser kontinuierlich.

Vor allem bei der Polymerisation großer Mengen ist es vorteilhaft, mit einem Teil des (der) Monomeren und der wäßrigen Emulgatorlösung die Polymerisation zu beginnen und den Rest des (der) Monomeren und der Emulgatorlösung sowie die Initiatorlösung im Maße des Fortschreitens der Reaktion zuzugeben.

Die Polymerisationstemperatur kann im Bereich von 10 bis 60 °C, vorzugsweise von 30 bis 55 °C gewählt werden. Die üblichen Bedingungen der Emulsionspolymerisation wie Rühren zum Aufrechterhalten der Dispersion und Homogenisieren sowie vollständiger Ausschluß von Luftsauerstoff durch Verdrängen mit einem Inertgas wie Stickstoff werden eingehalten. Die Polymerisation wird bis zu Umsätzen über 80 % vorzugsweise bis zu 90-98 % geführt und dann durch Abkühlen oder Abstoppen mit einem Radikalfänger wie Diethylhydroxylamin oder durch sofortiges Entmonomerisieren z. B. durch Strippen mit Wasserdampf abgebrochen. Dieses Entmonomerisieren wird in jedem Fall durchgeführt. Ebenso wird man den fertigen Latex filtrieren, um auch kleinste Mengen von Ausscheidungen abzutrennen. Der Latex kann gegebenenfalls noch mit Alterungsschutzmitteln versetzt werden.

Die vorliegende Erfindung ist in besonderem Maße zur kontinuierlichen Herstellung von Polychloropren-Latex geeignet. Die kontinuierliche Herstellung bietet neben wirtschaftlichen auch technische Vorteile. Die Abführung der Polymerisationswärme ist bei der Reaktionsfreudigkeit des Chloroprens und seiner hohen Konzentration im Reaktionsgemisch besonders problematisch. Reaktoren in Form großer Rührkessel, wie sie bei batchweiser Polymerisation verwendet werden, weisen i. a. ungünstige Oberflächen/Volumen-Verhältnisse auf, die für die Wärmeabfuhr unzureichend sind. Batchweise Polymerisation mit kontinuierlichem Zulauf des Reaktionsgemisches, angepaßt an die Wärmeabfuhr, ist möglich, weist jedoch Nachteile auf, nämlich eine unwirtschaftliche Ausnutzung des Kesselvolumens und eine über vollständigen Umsatz hinausgehende Verweilzeit für einen Teil des Latexteilchen. Bei kontinuierlicher Polymerisation in einer Rührkesselkaskade lassen sich diese Nachteile vermeiden oder zumindest stark vermindern. Die einzelnen Kessel in der Kaskade sind wesentlich kleiner als ein Kessel für batchweise Polymerisation, so daß die Wärme sicher abgeführt werden kann.

Die Erfindung wird anhand der nachstehenden Beispiele erläutert. Die mitaufgeführten Vergleichsbeispiele zeigen sowohl die Überlegenheit der erfindungsgemäß hergestellten Latices gegenüber den entsprechend den Beispielen der genannten Offenlegungsschriften hergestellten Latices, als auch die Notwendigkeit der Kombination der erfindungsgemäßen Maßnahmen zur Erzielung eines Latex mit verbesserten Eigenschaften. Alle Angabe in Teilen sind Gewichtsteile, bezogen auf 100 Gewichtsteile Monomer.

Als wesentliche Eigenschaften werden hier aufgeführt : Konzentration, Viskosität, Zinkoxid-Stabilität, Calciumchlorid-Stabilität, Festigkeit des vulkanisierten Polymerfilms.

Andere Eigenschaften, wie Defo-Wert, HCl-Abspaltung und Shore-Härte werden durch die erfindungsgemäßen Maßnahmen nicht oder nur unwesentlich beeinflußt.

Durch Einsatz vieler Mischungsbestandteile, vornehmlich durch Zinkoxid, Füllstoffe, Beschleuniger, Harze u. a., wird die chemische Stabilität von Latices herabgesetzt. Es ist deshalb wichtig, die chemische Stabilität auf einem bestimmten Niveau zu halten, um später eine sichere Verarbeitbarkeit zu gewährleisten.

Eine bewährte Methode ist die Messung der Zinkoxid-Stabilität. Ebenso wichtig ist jedoch auch die Calciumchlorid-Stabilität. Diese Meßmethode zeigt einerseits wieviel Elektrolyt — speziell Calciumchlorid — der Latex vertragen kann, ohne zu koagulieren und andererseits, ob er überhaupt mit Elektrolyten vollständig koaguliert werden kann. Letzteres ist nämlich für viele Anwendungen unabdingbare Forderung.

Bei der Prüfung der Zinkoxid-Stabilität wird der zu prüfende Latex mit einer 4 gew.-%igen wäßrigen Lösung von iso-butyl-naphthalinsulfonsaurem Natrium auf eine Konzentration von 25 Gew.-% verdünnt. 200 g dieses verdünnten Latex werden mit 180 g Zinkoxid-Dispersion folgender Zusammensetzung versetzt : 60 g Zinkoxid aktiv, dispergiertin 120 g einer 5 gew.-%igen wäßrigen Lösung eines Formaldehydkondensats von naphthalinsulfonsaurem Natrium. Das Gemisch gibt man in einen Becher aus VA-Stahl (Ø 70 mm, H 100 mm + 30 mm Rand, 1 mm Wandstärke, poliert) und bringt diesen in ein 100 °C heißes Wasserbad. Dann rührt man die Latexmischung mit einem Thermometer bis Koagulation eintritt. Die Temperatur der Mischung beim Koagulationseintritt und die bis dahin verstrichene Zeit dienen als Maß für die Zinkoxid-Stabilität. Ist bis 240 Sekunden die Koagulation nicht eingetreten, so wird die Messung abgebrochen.

Zur Messung der Calciumchlorid-Stabilität werden 20 g des Latex in einem 150 ml fassenden Porzellanbecher vorgelegt. Zu dem Latex tropft man aus einer Bürette unter langsamen Umrühren mit einem Glasstab so lange eine 10 gew.-%ige wäßrige Calciumchlorid-Lösung, bis alle Kautschuk-Substanz ausgefällt ist. Das Zutropfen der Calciumchlorid-Lösung unterbricht man mehrfach, um das bereits ausgefällte Koagulat zu zerdrücken und auszupressen, damit auch der vom Koagulat eingeschlossene Latex für die Bestimmung miterfaßt wird.

Brauchbare Polychloroprenlatices weisen eine Zinkoxid-Stabilität über 60 °C, gute eine solche über 65 °C auf. Die Calciumchlorid-Stabilität muß zwischen 3,0 und 5,0 ml liegen.

Ein Polychloroprenlatex mit zu geringer Zinkoxid-Stabilität kann in dieser Eigenschaft durch Zusatz nichtionischer Emulgatoren verbessert werden. Gleichzeitig wird aber auch die Calciumchlorid-Stabilität heraufgesetzt, was unerwünscht ist. Calciumchlorid-Stabilitäten von 5,0 ml und darüber bedeuten nämlich, da der Latex nicht mehr einwandfrei und vor allem nicht mehr vollständig gefällt werden kann. Man findet in diesen Fällen ein milchig trübes, noch Polymer enthaltendes Serum. Somit ist die Möglichkeit, einen Latex in der Zinkoxid-Stabilität nachträglich zu verbessern, nur sehr gering.

Zur Bestimmung der Zugfestigkeit wird eine Latexmischung aus einer Menge Latex, die 100 Tle. Polymertrockensubstanz enthält, mit einer Dispersion aus 7,5 Tle. Zinkoxid aktiv, 2,0 Tle. Diphenylthioharnstoff und 1,0 Tle. Diphenylguanidin in 18,5 Tln. einer 5 gew.-%igen wässerigen Lösung eines Formaldehydkondensats von naphthalinsulfonsaurem Natrium hergestellt. Aus dieser Latexmischung wird mit Hilfe der « Tonplattenmethode » (Auftrocknen eines 1 mm starken Films auf einer Tonplatte bei Raumtemperatur) ein 1 mm starker Film hergestellt.

Die Messung der Zugfestigkeit erfolgt am verkleinerten Normstab 1 nach DIN 53 504. Die Zugfestigkeiten sollen mindestens 17,0 MPa betragen. Als gute Werte gelten Zugfestigkeiten über 18 MPa.

## Beispiel 1

In ein Reaktionsgefäß, das mit Rührer, Rückflußkühler, Tropftrichter, sowie Stickstoff ein- und -auslaß ausgerüstet ist, werden eine Lösung aus 50 Gew.-Tln. Wasser, 5,0 Gew.-Tln. 70 gew.-%iger disprop. Abietinsäure, 0,75 Gew.-Tln. Formaldehydkondensat von Naphthalinsulfonsäure, 0,9 Gew.-Tln. Kaliumhydroxid und 0,5 Gew.-Tln. Natriumhexametaphosphat sowie 100,0 Gew.-Tle. Chloropren mit 0,1 Gew.-Tln. Dodecylmercaptan vorgelegt. Der Luftsauerstoff im Gefäß wird durch Stickstoff verdrängt und die Temperatur auf 44 °C erhöht.

2,5 gew.-%ige wäßrige Foramidinsulfinsäure-Lösung wird so zugetropft, daß eine gleichmäßige Polymerisation erfolgt. Nach 3, 5 Stunden und einem Verbrauch von 8,6 Gew.-Tln. der Formamidinsulfinsäure-Lösung wird ein Umsatz von 95 % erreicht. Die Polymerisation wird durch Zusatz von 1,0 Tln. 25 gew.-%iger Diethylhydroxaminlösung und Abkühlen abgebrochen. Es wird ein ausscheidungsfreier Latex mit einem pH-Wert von 13,2 erhalten. Das nicht umgesetzte Chloropren wird durch leichtes Andestillieren im Vakuum entfernt. Der Feststoffgehalt beträgt 58,2 %.

Weitere Beispiele und Vergleichsbeispiele sind mit ihren anwendungstechnischen Resultaten in den Tabellen 1 und 2 aufgeführt. Die Durchführung der Versuche entsprach dem Beispiel 1.

(Siehe Tabelle Seite 5 ff.)

| Beispiel | 1 | 2 | 3 | 4 | 5 | 6 |
|---|---|---|---|---|---|---|
| Wasser | 50,0 | 50,0 | 50,0 | 50,0 | 50,0 | 50,0 |
| Disprop. Abietinsäure | 3,50 | 3,36 | 3,36 | 3,36 | 3,36 | 2,80 |
| Formaldehydk. von Naphthalins | 0,75 | 0,65 | 0,65 | 0,35 | 0,80 | 0,65 |
| Kaliumhydroxid | 0,9 | 0,9 | 0,9 | 0,9 | 0,9 | 0,9 |
| Natriumhexametaphosphat | 0,5 | 0,75 | 0,25 | 0,5 | 0,5 | 0,5 |
| Chloropren | 100,0 | 100,0 | 100,0 | 100,0 | 100,0 | 100,0 |
| Dodecylmerkaptan | 0,1 | 0,05 | 0,05 | 0,05 | 0,05 | 0,05 |
| Formamidinsulfinsäure, 25 gew.-%ig | 8,6 | 10,0 | 9,25 | 10,0 | 10,0 | 11,25 |
| Pol.-Temperatur (°C) | 44 | 45 | 45 | 45 | 45 | 45 |
| Pol.-Zeit (Stdn.) | 3,5 | 4 | 3,75 | 4 | 4 | 4,5 |
| Umsatz (%) | 95 | 95 | 96,5 | 98 | 96,5 | 96 |
| Feststoffgehalt[1] (%) | 58,2 | 58,1 | 59,1 | 58,5 | 58,3 | 58,8 |
| Ausscheidungen | keine | keine | keine | keine | keine | keine |
| pH-Wert | 13,2 | 13,0 | 13,1 | 13,1 | 13,0 | 13,0 |
| Viskosität[2] (cP) | 180 | 130 | 440 | 180 | 80 | 40 |
| Zinkoxid-Stabilit (sek./°C) | 134/80 | > 240/97 | 118/61 | 185/81 | 172/79 | > 240/97 |
| Calciumchlorid-Stab. (ml) | 3,5 | 4,2 | 4,1 | 4,2 | 3,9 | 4,5 |
| Festigkeit[3] (MPa) | 17,4/17,3 | 18,3/17,7 | 18,0/18,5 | 17,2/17,7 | 18,7/17,9 | 17,5/17,1 |

[1] nach Entfernung der nicht umgesetzten Monomeren
[2] Brookfield, Spindel 3,60 Upm
[3] Werte nach 30/40 Min. Vulkanisation

| Vergleichsbeispiele | 7 | 8 | 9 | 10 | 11 | 12 | 13 |
|---|---|---|---|---|---|---|---|
| Wasser | 50,0 | 50,0 | 50,0 | 50,0 | 50,0 | 50,0 | 50,0 |
| Disprop. Abietinsäure | 1,9 | 1,9 | 3,5 | 1,9 | 3,5 | 2,66 | 3,5 |
| Formald. v. Naphthalins. | 1,0 | 2,0 | 0,75 | 1,0 | — | — | 0,75 |
| Kaliumhydroxid | 1,1 | 1,1 | 0,9 | 1,1 | 0,9 | 0,75 | 0,9 |
| iso-Nonylphenol mit 10 EO | — | — | — | — | 0,2 | — | — |
| Benzyl-phenylphenol mit 14 EO | — | — | — | — | — | 0,01 | — |
| Dimerisierte Linolsäure | — | 0,32 | — | — | — | — | — |
| Trinatriumphosphat | — | — | — | — | 0,5 | — | — |
| Natriumhexametaphosphat | — | — | 0,5 | — | — | — | — |
| Chloropren | 100,0 | 100,0 | 100,0 | 100,0 | 100,0 | 100,0 | 100,0 |
| Dodecylmercaptan | 0,1 | 0,1 | 0,1 | 0,1 | 0,1 | 0,1 | 0,1 |
| Natriumsulfit | 0,1 | 0,1 | 0,1 | — | — | — | — |
| Dextrose | 0,1 | 0,1 | 0,1 | — | — | — | — |
| Wasser 10,0 / Kaliumperoxodisulfat 0,5 / Natrium-2-anthrachinonsulfonat 0,0125 | 10,5 | 9,6 | 4,5 | — | — | — | — |
| Formamidinsulfinsäure, 2,5 -%ig | — | — | — | 19,0 | 21,0 | 10,0 | 7,85 |
| Pol.-Temperatur (°C) | 44 | 44 | 44 | 44 | 44 | 44 | 44 |
| Pol.-Zeit (Stdn.) | 4 | 4 | 4 | 4 | 3,5 | 4 | 3 |
| Umsatz (%) | 36 | 100 | 98 | 42 | 92,5 | 94 | 94 |

(Fortsetzung)

| Vergleichsbeispiele | | 7 | 8 | 9 | 10 | 11 | 12 | 13 |
|---|---|---|---|---|---|---|---|---|
| Feststoffgehalt | (%) | Umsatz zu ger. | 60,4 | 61,8 | Umsatz zu ger. | 53,1 | 58,2 | 60,3 |
| Ausscheidungen | (%) | | 4 | keine | | keine | keine | keine |
| pH-Wert | | | 12,8 | 12,8 | | 12,3 | 12,5 | 12,7 |
| Viskosität | (cP) | | 3 880 | 400 | | 20 | 420 | 640 |
| Zinkoxid-Stabilität | (°C) | | Latex | Latex | | 75 | 47 | 51 |
| Calciumchlorid-Stabilität | (ml) | | zu | nach 3 | | 2,9 | 4,2 | 3,0 |
| Festigkeit | (MPa) | | viskos | Tagen voller Stippen | | 15,4/16,5 Pol. springt nur schwer an. Initiator Verbr. zu noch | 17,6/17,1 | 17,3/17,2 |

## Anspruch

Verfahren zur Polymerisation von Chloropren, das bis zu 50 Gew.-% eines copolymerisierbaren Monomeren enthalten kann, in einer alkalischen, wäßrigen Emulsion, deren Alkaliionen zumindest teilweise Kaliumionen sind, zu einem feststoffreichen Latex mit Feststoffgehalten von 50 bis 65 Gew.-% in Gegenwart eines Alkalisalzes der disproportionierten Abietinsäure und 0,3 bis 2,0 Gew.-Teile eines Formaldehydkondensates einer Naphthalinsulfonsäure sowie eines Alkalihydroxids, wobei die Polymerisation bis zu einem Umsatz über 90 % durchgeführt wird, dadurch gekennzeichnet, daß

a) 2,8 bis 3,8 Gew.-Teile eines Alkalisalzes der disproportionierten Abietinsäure verwendet werden

b) die wäßrige Phase zusätzlich 0,25 bis 0,75 Gew.-Teile eines Alkaliphosphats und/oder -polyphosphats enthält und

c) die Polymerisation mittels Formamidinsulfinsäure initiiert wird, wobei sich alle Gewichtsteile auf 100 Gew.-Teile Monomer beziehen.

## Claim

Process for polymerising chloroprene which can contain up to 50 % by weight of a copolymerisable monomer, in an alkaline, aqueous emulsion of which the alkali ions are at least partly potassium ions, to give a latex rich in solid matter and having solids contents of 50 to 65 % by weight, in the presence of an alkali salt of disproportionated abietic acid and 0.3 to 2.0 parts by weight of a formaldehyde condensate of a naphthalene sulphonic acid and of an alkali hydroxide, the polymerisation being carried out until there is a conversion of more than 90 %, characterised in that

a) 2.8 to 3.8 parts by weight of an alkali salt of disproportionated abietic acid are used,

b) the aqueous phase additionally contains 0.25 to 0.75 parts by weight of an alkali phosphate and/or alkali polyphosphate and

c) the polymerisation is initiated by means of formamidine sulphinic acid, all parts by weight relating to 100 parts by weight of monomer.

## Revendication

Procédé de polymérisation de chloroprène qui peut contenir jusqu'à 50 % en poids d'un monomère copolymérisable, dans une émulsion aqueuse alcaline dont les ions alcalins sont au moins en partie des ions potassium, pour former un latex riche en matières solides dont les teneurs en matières solides vont de 50 à 65 % en poids, en présence d'un sel alcalin de l'acide abiétique dismuté et de 0,3 à 2,0 parties en poids d'un produit de condensation du formaldéhyde d'un acide naphtalènesulfonique, ainsi que d'un hydroxyde alcalin, la polymérisation étant conduite jusqu'à un degré de réaction de plus de 90 %, caractérisé en ce que

a) on utilise 2,8 à 3,8 parties en poids d'un sel alcalin de l'acide abiétique dismuté,

b) la phase aqueuse contient en outre 0,25 à 0,75 partie en poids d'un phosphate et/ou d'un polyphosphate alcalin et

c) la polymérisation est amorcée au moyen d'acide formamidinosulfinique, toutes les parties en poids étant rapportées à 100 parties en poids de monomère.